# EUROPÄISCHE PATENTSCHRIFT

(11) **EP 0 974 236 B1**
(45) Veröffentlichungstag und Bekanntmachung des Hinweises auf die Patenterteilung: **22.06.2005**
(21) Anmeldenummer: 98909283.8
(22) Anmeldetag: 26.01.1998
(51) Int. Cl.: H04Q 7/22, H04Q 7/38, H04B 7/26

(54) **VERFAHREN UND BASISSTATIONSSYSTEM ZUM RUFEN VON MOBILSTATIONEN FÜR EINE PAKETDATENÜBERTRAGUNG**
METHOD AND BASE STATION SYSTEM FOR CALLING MOBILE STATIONS FOR THE TRANSMISSION OF PACKET DATA
PROCEDE ET SYSTEME DE STATION DE BASE POUR APPELER DES STATIONS MOBILES AFIN DE TRANSMETTRE DE DONNEES EN PAQUETS

(30) Priorität: 24.02.1997 DE 19707261
(43) Veröffentlichungstag der Anmeldung: 26.01.2000
(73) Patentinhaber: SIEMENS AKTIENGESELLSCHAFT, 80333 München (DE)
(72) Erfinder: MENZEL, Christian, D-82216 Maisach (DE); ÖTTL, Martin, D-82362 Weilheim (DE)
(86) Internationale Anmeldenummer: PCT/DE1998/000229
(87) Internationale Veröffentlichungsnummer: WO 1998/038818

(56) Entgegenhaltungen:
- EP-A- 0 687 078
- WO-A-95/12931
- BRASCHE G: "EVALUATION OF A MAC PROTOCOL PROPOSED FOR A GENERAL PACKET RADIO SERVICE IN GSM" IEEE INTERNATIONAL SYMPOSIUM ON PERSONAL, INDOOR AND MOBILE RADIO COMMUNICATIONS, Bd. 2, 15. Oktober 1996, Seiten 668-672, XP000198338

## Beschreibung

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der Dauer der gesamten Datenübertragung eine logische Verbindung zwischen den zwei Kommunikationsendgeräten, jedoch werden physikalische Ressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Das aus der deutschen Patentschrift DE 44 02 930 A1 bekannte Paketdatenübertragungsverfahren bietet sich insbesondere für Kommunikationssysteme mit begrenzten physikalischen Ressourcen an. Beispielsweise in Mobilfunksystemen, wie dem GSM-Mobilfunksystem (Global System for Mobile Communications), sind die physikalischen Ressourcen im Frequenzbereich - Anzahl der Frequenzkanäle und Zeitschlitze - beschränkt und müssen rationell genützt werden.

Das GSM-Mobilfunksystem ist ein Beispiel für ein Zeitmultiplex-Mobilfunksystem, wobei Zeitschlitze innerhalb eines Frequenzkanals auf verschiedene Kommunikationsendgeräte aufgeteilt werden können. Die netzseitige Funkstation eines Mobilfunknetzes ist eine Basisstation, die über eine Funkschnittstelle mit Mobilstationen kommuniziert. Die Übertragung von einer Mobilstation zur Basisstation wird als Aufwärtsrichtung, die Übertragung von der Basisstation zu einer Mobilstation als Abwärtsrichtung bezeichnet. Ein Kanal, der für die Paketdatenübertragung reserviert ist, wird durch zumindest einen Zeitschlitz pro Zeitmultiplex-Rahmen gebildet. Mehreren Zeitmultiplex-Rahmen bilden dabei einen Makrorahmen. Weiterhin bezeichnen die Trägerfrequenz und evtentuell eine Frequenzsprungsequenz den Kanal.

Das GSM-Mobilfunksystem wurde ursprünglich zur Übertragung von Sprache konzipiert, wobei ein Kanal für die ständige Informationsübertragung zwischen Mobilstation und Basisstation reserviert wurde. Bei der Paketdatenübertragung wird jedoch ein gemeinsamer Paketdatenkanal zur Paketdatenübertragung für mehrere Mobilstationen genutzt.

Ist eine Datenübertragung vom Netz zur Mobilstation , also in Abwärtsrichtung, gewünscht, wird diese Mobilstation vom Netz über das Basisstationssystem gerufen (paging). Dazu sind innerhalb des Paketdatenkanals Zeitschlitze zum Rufen vorgesehen, in denen für einen Rufaufbau benötigte Signalisierungsnachrichten, jedoch keine Nutzdaten übertragen werden.

Für alle Mobilstationen ist auf diese Weise der zeitliche Abstand zwischen zwei aufeinanderfolgenden Rufmöglichkeiten gleich. Für Anwendungen, die eine sofortige Datenübertragung erfordern, ist die Wartezeit zwischen zwei aufeinanderfolgenden Rufmöglichkeiten zu lang.

Der Erfindung liegt folglich die Aufgabe zugrunde, ein verbessertes Verfahren und ein verbessertes Basisstationssystem zum Rufen von Mobilstationen in einem Mobilfunknetz anzugeben, Diese Aufgabe wird durch das Verfahren mit den Merkmalen des Patentanspruchs 1 und durch das Basisstationssystem mit den Merkmalen des Patentanspruchs 14 gelöst. Vorteilhafte Weiterbildungen der Erfindung sind den Unteransprüchen zu entnehmen.

Erfindungsgemäß wird beim Verfahren zum Rufen von Mobilstationen eine Zuteilung von Mobilstationen zu Zeitschlitzen zum Rufen anhand von teilnehmerspezifischen Profilen vorgenommen. Die Anzahl der zugeteilten Zeitschlitze zum Rufen innerhalb eines Makrorahmen kann für die Mobilstationen individuell eingestellt werden.

Dadurch kann für jede Mobilstation der Bedarf an zugeteilten Zeitschlitzen zum Rufen individuell gedeckt werden. Für zeitkritische Anwendungen sind mit dem erfindungsgemäßen Verfahren geringere Verzögerungszeiten erreichbar. Die Anzahl der zugeteilten Zeitschlitze zum Rufen richtet sich dabei nach teilnehmerspezifischen Profilen, die netzseitig und/oder mobilsstaionsseitig gespeichert sind und die ggf. zwischen der Mobilstation und dem Basisstationssystem signalisiert werden.

Nach einer vorteilhaften Ausgestaltung der Erfindung werden mehrere Gruppen zum Rufen von Mobilstationen gebildet. Eine Mobilstation wird einer dieser Gruppe zugeteilt, wobei den Gruppen unterschiedliche Anzahl von Zeitschlitzen zum Rufen innerhalb eines Zykluses zugewiesen werden können. Der Signalisierungsaufwand zum Bilden solchen Gruppen ist gering, deshalb kann durch die Gruppenbildung schnell dem individuellen Bedarf der Mobilstationen entsprochen werden. Weiterhin ist es vorteilhaft, wenn eine Mobilstation mehreren Gruppen zugleich zugeteilt wird. Damit läßt sich für diese Mobilstation sehr leicht eine verkürzte Verzögerungszeit beim Rufen erreichen.

Gemäß einer vorteilhaften Weiterbildung der Erfindung wird den Mobilstationen die Zugehörigkeit zu den Gruppen von der Basisstation signalisiert. Auf diese Weise wird schnell, flexibel und mit nur geringem Signalisierungsaufwand einem veränderten Bedarf der Mobilstation entsprochen.

Der veränderte Bedarf wird vorteilhafterweise von der Mobilstation zur Basisstationssystem durch die Änderung ihres teilnehmerspezifischen Profils signalisiert, worauf das Basisstationssystem für die Mobilstation eine geänderte Zuteilung der Zeitschlitze zum Rufen vornimmt. Teilnehmerspezifische Profile, die auch für weitere Ressourcenzuteilungen bei einer späteren Nutzkanalzuweisung benutzt werden können, eignen sich besonders als Kriterium für den Bedarf an Zeitschlitzen zum Rufen. Jeder Mobilstation kann unabhängig von anderen Mobilstationen ein spezifisches Profil zugeordnet werden, währenddessen die Ressourcenzuteilung durch das Basisstationssystem nach einer Berücksichtigung aller zu versorgenden Mobilstationen optimiert werden kann.

Um die Verzögerungszeiten für die Mobilstationen weiter zu verringern, werden als Zeitschlitze zum Rufen zusätzlich Zeitschlitze zur Nutzdatenübertragung verwendet. Eine oder mehrere Mobilstationen können über diese Zeitschlitze zusätzlich gerufen werden. Der Abstand zwischen zwei Zeitschlitzen zum Rufen wird damit verkürzt.Zweckmäßigerweise zeigen in den Zeitschlitzen zur Nutzdatenübertragung übertragene Kurzkennungen das Vorliegen von Rufen für die Mobilstationen an.

Für Mobilstationen, bei denen die Zeitverzögerungen für einen Ruf unkritisch sind, kann durch geeignete Zuteilung von Zeitschlitzen zum Rufen ein großer Abstand (ggf. mehrere Sekunden) eingestellt werden. Eine Mobilstation kann damit zwischen den ihr zugewiesenen Zeitschlitzen zum Rufen in einem Energiesparmodus geschalten werden. Für diese Mobilstation verringert sich der Energieverbrauch. Damit sind auch längere Betriebszeiten bis zu einem späteren Aufladen der Batterie möglich. Das erfindungsgemäße Verfahren ist jedoch nicht nur auf die Anwendung auf mobile, gerufene Funkstationen anwendbar. Die gerufene Mobilstation kann auch stationär sein.

Nach vorteilhaften Weiterentwicklungen der Erfindung werden die teilnehmerspezifischen Profile durch unterschiedliche Dienstgüteklassen bezeichnet. Diese Dienstegüteklassen (Quality of Service) sind beispielsweise für das GSM-Mobilfunknetz standardisierte Kennzeichen einer Paketdatenübertragung, die für das erfindungsgemäße Verfahren leicht mitbenutzt werden können. Alternativ dazu werden die teilnehmerspezifischen Profile durch unterschiedliche von der Mobilstation benutzte Dienste bezeichnet. Auch anhand des zu benutzenden Dienstes, z.B. E-mail (größere Verzögerung) oder Elektronische Zugbeeinflußung (geringe Verzögerung), kann leicht die noch akzeptable oder gar gewünschte Verzögerung bestimmt werden. Weiterhin ist es möglich die Zuteilung von Zeitschlitzen zum Rufen an der Anzahl von im Funkbereich des Basisstationssystems registrierten Mobilstationen auszurichten. Diese Kenntnis kann in eine verbesserte Zuteilungsstrategie einfließen.

Weitere vorteilhafte Ausprägungen der teilnehmerspezifischen Profile werden durch unterschiedliche Prioritäten, durch unterschiedliche zulässige Verzögerungszeiten oder durch unterschiedliche geforderte Datenraten der Paketdatenübertragung bezeichnet. Aus diesen Werten lassen sich die zulässigen Abstände zwischen zwei der jeweiligen Mobilstation zugeteilten Zeitschlitze zum Rufen direkt ablesen.

Die Erfindung wird nachfolgend bezugnehmend auf zeichnerische Darstellungen anhand von Ausführungsbeispielen näher erläutert.

Dabei zeigen
- FIG 1: ein Blockschaltbild eines Zeitmultiplex-Mobilfunksystems zur Paketdatenübertragung,
- FIG 2: einen Frequenzkanal mit Zeitmultiplex,
- FIG 3: die Zeitschlitze eines Kanals für eine Paketdatenübertragung und für ein Rufen von Mobilstationen ohne Gruppenbildung, und
- FIG 4: die Zeitschlitze eines Kanals für eine Paketdatenüber tragung und für ein Rufen von Mobilstationen mit Gruppenbildung.

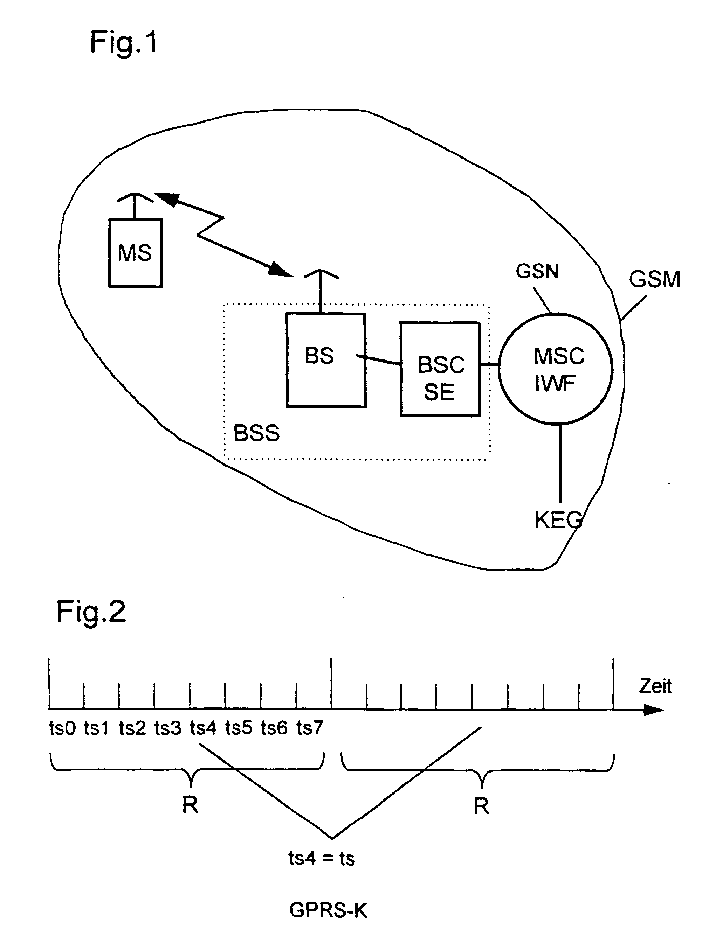

Das Zeitmultiplex-Mobilfunksystem nach FIG 1 ist beispielsweise ein GSM-Mobilfunknetz GSM, das zumindest ein Basisstationssystem BSS mit einem Basisstationscontroler BSC und einer Basisstation BS enthält. Im Funkbereich der einen dargestellten Basisstation BS befinden sich Mobilstationen MS. Das Basisstationssystem BSS stellt die Verbindung zu weiteren Einrichtungen des GSM-Mobilfunknetzes GSM her. Im Basisstationscontroler BSC ist eine Steuereinrichtung SE implentiert, die eine Zuteilung von funktechnischen Ressourcen für die Mobilstationen MS durchführt. Die Steuereinrichtung SE kann jedoch auch in anderen Einrichtungen des Mobilfunksystem realisiert sein.

Diese weiteren Einrichtungen sind z.B. eine Mobilvermittlungsstelle MSC und eine Einheit zur Realisierung von Interworking-Funktionen IWF. Das Zusammenwirken von Mobilvermittlungsstelle MSC und Interworking-Funktionen IWF ergibt eine Paketvermittlungsstelle, die auch als GSN (GPRS support node) bezeichnet wird. Diese Paketvermittlungsstelle ist an eine MSC zur Sprachvermittlung angeschlossen, alternativ könnte sie als abgesetzte eigene Einheit realisiert werden.

Das GSM-Mobilfunknetz GSM kann mit weiteren Kommunikationsnetzen verbunden sein. Beispielhaft ist ein weiteres Kommunikationsendgerät KEG mit dem GSM-Mobilfunknetz verbindbar oder selbst Bestandteil dieses GSM-Mobilfunknetzes GSM.

Das GSM-Mobilfunknetz GSM soll zur Paketdatenübertragung parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen.

Die Funkschnittstelle zwischen den Mobilstationen MS und einer Basisstation BS ist durch eine Frequenz und zumindest einen Zeitschlitz ts charakterisiert. Nach FIG 2 werden beispielsweise acht Zeitschlitze ts (ts0 bis ts7) zu einem Rahmen R zusammengefaßt. Der Rahmen R, wiederholt sich zyklisch, wobei zu einem Kanal ein wiederkehrender Zeitschlitz beispielsweise der Zeitschlitz ts = ts4 gehört. Dieser Zeitschlitz ts wird im folgenden als Kanal GPRS-K für die Paketdatenübertragung im Sinne des Dienstes GPRS (General Paket Radio Services) verwendet. Mehrere Zeitmultiplex-Rahmen R können zu einem Makrorahmen zusammengefaßt werden.

Soll eine Mobilstation MS diesen Dienst nutzen, dann führt sie entsprechend der GSM-Terminologie einen willkürlichen Zugriff (Random Access) mit einem kurzen sogenannten access burst durch und wechselt auf einen dedizierten Kontrollkanal. Es folgt eine Authentifikation und das Setzen des Kontexts bezüglich einer logischen Verbindung (standby state). Soll das weitere Kommunikationsendgerät KEG über den Paketdatendienst mit einer Mobilstation MS kommunizieren, erfolgt netzseitig ein Rufen (Paging) der gewünschten Mobilstation MS sowie der geschilderte willkürliche Zugriff.

Für eine weitere Paketdatenübertragung in Abwärtsrichtung wird der Mobilstation MS eine Kurzkennung id und der entsprechende GPRS-Kanal GPRS-K zugewiesen. Worauf netzseitig die Vorhaltzeit (Timing Advance) und die Empfangspegel in der Basisstation BS bestimmt werden. Daraufhin werden der Mobilstation MS, bezeichnet durch die Kurzkennung id, vier aufeinanderfolgende Zeitschlitze T als ein Paketdatenblock TCH in Abwärtsrichtung übertragen.

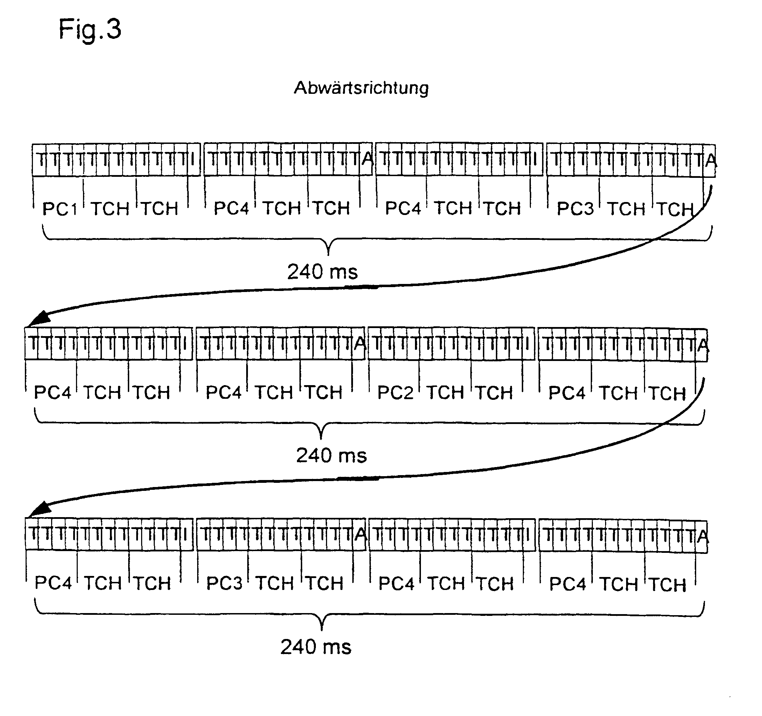

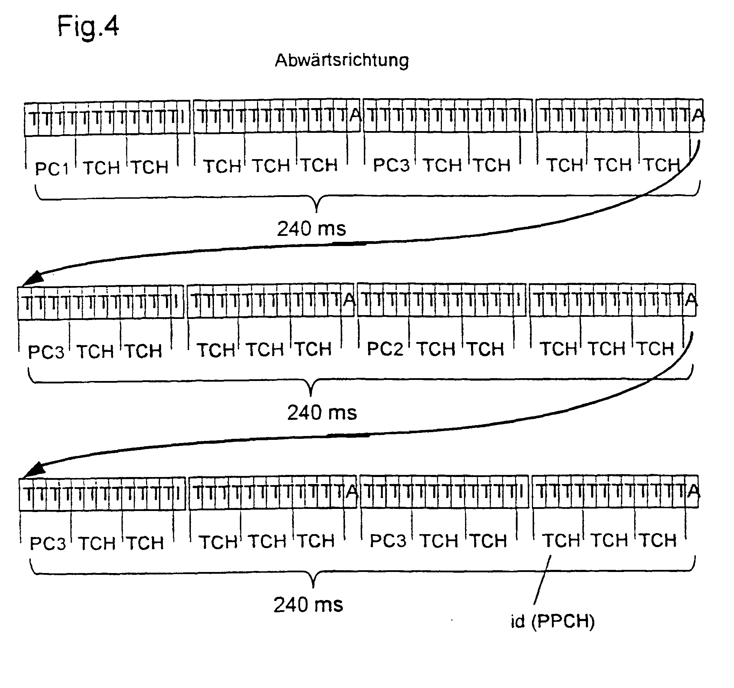

Das Rufen einer Mobilstation MS wird anhand von FIG 3 und 4 gezeigt, wobei jeweils drei Makrorahmen zu einem Rahmen höherer Ordnung zusammengefaßt werden.

Es werden jeweils vier Zeitschlitze T zur Paketdatenübertragung zu einem Paketdatenblock TCH oder einen Block PC1, PC2, PC3, PC4 mit Zeitschlitzen PPCH zum Rufen zusammengefaßt. Drei solche Paketdatenblöcke TCH und ein Zeitschlitz A,I zur Signalisierung wiederholen sich viermal zu einem Makrorahmen, der 52 Rahmen R umfaßt. Ein Makrorahmen dauert 240 ms.

Die Informationen eines Paketdatenblockes TCH mit vier Zeitschlitzen T sind verschachtelt. Die Zuweisung von Paketdatenblöcken TCH zu verschiedenen Mobilstationen MS erfolgt in Aufwärts- und Abwärtsrichtung flexibel auf eine oder mehrere Mobilstationen MS. Damit können verschiedene Datenraten realisiert werden. Zwischen den Mobilstationen MS kann über den Zugriff auf den GPRS-Kanal anhand von Priorisierungen entschieden werden. Die Zuordnung von Paketdatenblöcken TCH während des Bestehens einer logischen Verbindung erfolgt im Band, d.h. innerhalb der Paketdatenblöcke TCH werden den Mobilstationen MS durch Indikatormeldungen angezeigt, wer folgende Paketdatenblöcke TCH nutzen kann.

In Abwärtsrichtung werden vier aufeinanderfolgende Zeitschlitze T zur Paketdatenübertragung verschachtelt. Die dazwischenliegenden Zeitschlitze I werden zu Messungen der Mobilstationen MS in Nachbarzellen und die Zeitschlitze A zur Signalisierung verwendet. Die Abfolge von Zeitschlitzen A,I zur Signalisierung und Nachbarkanalmessung kann auf verschiedenen Sequenzen beruhen, beispielsweise A/I = 1/1.

Nach einem ersten Ausführungsbeispiel für das Rufen von Mobilstationen MS sind alle Mobilstationen MS einer gemeinsamen Gruppe zugeordnet. Zum Rufen werden die Blöcke PC1, PC2, PC3 und PC4 mit Zeitschlitzen PCCH zum Rufen verwendet.

Die Zuteilung dieser Blöcke PC1, PC2, PC3 und PC4 erfolgt nach teilnehmerspezifischen Profilen für die Mobilstationen MS. Die teilnehmerspezifischen Profile werden durch Dienstgüteklassen QoS 1 bis 4 gebildet, wobei für die Dienstgüteklassen QoS jeweils die durchschnittlichen Verzögerungszeiten (transfer delay), die eine Verzögerung in Auf- und Abwärtsrichtung zusammenfassen, und die übertragbaren Datenraten festgelegt sind. Für die Mobilstationen MS wird eine Dienstgüteklasse QoS festgelegt und gespeichert. Durch entsprechende Signalisierung durch die Mobilstation MS oder durch Vorgaben des Netzes können die Dienstgüteklassen QoS geändert werden. Alternativ zu den Dienstgüteklassen QoS können auch andere, oben bereits geschilderte Kriterien für die teilnehmerspezifischen Profile verwendet werden.

Nach FIG 3 werden Mobilstationen MS mit der Dienstgüteklasse QoS 2 die Blöcke PC1, PC2 und PC3 zugewiesen, so daß ein Rufen innerhalb von 180 ms garantiert ist. Den Mobilstationen mit der Dienstgüteklasse QoS 1 wird zusätzlich der Block PC4 zugewiesen, so daß für diese Mobilstationen MS eine Drittelung des Abstands zwischen zwei Rufen auf 60 ms eintritt. Damit sinkt für diese Mobilstationen MS auch die Verzögerung bis zum Senden eines Datenpakets. Für Mobilstationen MS mit der Dienstgüteklasse QoS 4, also der geringsten Priorität wird nur der Block PC1 zugewiesen, der Abstand beträgt hier 720 ms. Besonders die Mobilstationen MS, bei denen der Abstand 720 ms beträgt, können für diesen Zeitraum in einen Energiesparmodus schalten, der gegenüber einem häufigeren Rufen eine wesentliche Energieeinsparung schafft. Sollte eine dieser Mobilstationen MS mit der Dienstgüteklasse QoS 4 in die nächsthöhere Dienstgüteklasse QoS 3 wechseln, kann zusätzlich der Block PC2 zugeteilt werden. Wenn die Blöcke PC2, PC3 und PC4 von der Basisstation nicht für das Rufen von Mobilstationen benötigt werden, können sie für die Nutzdatenübertragung verwendet werden.

Nach einem zweiten Ausführungsbeispiel für das Rufen von Mobilstationen MS sind die Mobilstationen MS zwei Gruppen 1 und/oder 2 zugeordnet. Zum Rufen werden wiederum die Blöcke PC1, PC2, PC3 und PC4 mit Zeitschlitzen PCCH zum Rufen verwendet.

Gemäß FIG 4 werden den Mobilstationen MS mit der Dienstgüteklasse QoS 4 in der ersten Gruppe 1 der Block PC1 zugeordnet, der sich nur alle 720 ms wiederholt. Den Mobilstationen MS mit der Dienstgüteklasse QoS 4 in der zweiten Gruppe 2 wird der Block PC2 zugeordnet. Für diese Mobilstationen MS erfolgt ein seltenes Rufen.

Mobilstationen MS mit der Dienstgüteklasse QoS 3 beider Gruppen 1 und 2 werden in den Blöcken PC1 und PC2 gerufen, wodurch sich ein Halbierung des Abstandes zwischen zwei möglichen Rufen ergibt. Für die Mobilstationen MS mit den Dienstgüteklassen QoS 1 und 2 werden die Blöcke PC1, PC2 und PC3 zum Rufen benutzt, wodurch für diese Mobilstationen MS der minimale Abstand nur 120 ms beträgt. Wenn der Block PC3 von der Basisstation nicht für das Rufen von Mobilstationen benötigt wird, kann er für die Nutzdatenübertragung verwendet werden.

Soll der Abstand und damit die Verzögerung weiter verringert werden, dann kann ein Paketdatenblock TCH zum Rufen verwendet werden. Dabei kann es eine vorteilhafte Ausprägung sein, daß mit einer besonderen Kurzkennung id (üblicherweise werden die Kurzkennungen id zur Zuordnung von Paketdatenblöcken TCH zu Mobilstationen MS verwendet) gekennzeichnet wird, daß dieser Block für das Rufen benutzt wird. Bestimmten Mobilstationen MS wird diese Kurzkennung id zuvor signalisiert.

Insbesondere eignet sich das paketorientierte Übertragen von Informationen über die Funkschnittstelle für Telematikapplikationen, Fax und Dateiübertragung, Point of Sales Realisierungen, Flottenmanagement und Verkehrsleitsysteme.

## Patentansprüche

1. Verfahren zum Rufen von Mobilstationen (MS) für eine Paketdatenübertragung in einem Zeitmultiplex-Mobilfunksystem, wobei
- ein Paketdatenkanal (GPRS-K) durch zumindest einen Zeitschlitz (ts, T, A) pro Zeitmultiplex-Rahmen (R) gebildet wird und mehrere Zeitmultiplex-Rahmen (R) einen Makrorahmen bilden,
- die Paketdatenübertragung mehrerer Mobilstationen (MS) über den gemeinsamen Paketdatenkanal (GPRS-K) erfolgt,
- im Paketdatenkanal(GPRS-K) in zyklischen Abständen zumindest ein Zeitschlitz (PPCH) zum Rufen von Mobilstationen (MS) vorgesehen ist,
bei dem eine Zuteilung von Mobilstationen (MS) zu Zeitschlitzen (PPCH) zum Rufen anhand von teilnehmerspezifischen Profilen erfolgt, wobei die Anzahl der zugeteilten Zeitschlitze (PPCH) innerhalb des Makrorahmen für die Mobilstationen (MS) individuell eingestellt werden kann.

2. Verfahren nach Anspruch 1, bei dem
mehrere Gruppen zum Rufen von Mobilstationen (MS) gebildet werden.

3. Verfahren nach Anspruch 1 oder 2, bei dem
eine Mobilstation (MS) mehreren Gruppen zugleich zugeteilt wird.

4. Verfahren nach einem der Ansprüche 2 oder 3, bei dem
den Mobilstationen (MS) die Zugehörigkeit zu den Gruppen von einer Basisstation (BS) signalisiert wird.

5. Verfahren nach einem der vorhergehenden Ansprüche, bei dem eine Mobilstation (MS) einer Basisstation (BS) die Änderung ihres teilnehmerspezifischen Profils signalisiert, worauf für diese Mobilstation (MS) eine geänderte Zuteilung der Zeitschlitze (PPCH) zum Rufen erfolgt.

6. Verfahren nach einem der vorhergehenden Ansprüche, bei dem als Zeitschlitze (PPCH) zum Rufen zusätzlich Zeitschlitze (TCH) zur Nutzdatenübertragung verwendet werden.

7. Verfahren nach Anspruch 6, bei dem in den Zeitschlitzen (TCH) zur Nutzdatenübertragung übertragene Kurzkennungen (id) das Vorliegen von Rufen für die Mobilstationen (MS) anzeigen.

8. Verfahren nach einem der vorhergehenden Ansprüche, bei dem eine Mobilstation (MS) zwischen den ihr zugewiesenen Zeitschlitzen (PPCH) zum Rufen in einem Energiesparmodus geschalten wird.

9. Verfahren nach einem der vorhergehenden Ansprüche, bei dem die teilnehmerspezifischen Profile durch unterschiedliche Dienstgüteklassen (QoS) bezeichnet werden.

10. Verfahren nach einem der vorhergehenden Ansprüche, bei dem
die teilnehmerspezifischen Profile durch unterschiedliche von der Mobilstation (MS) benutzte Dienste bezeichnet werden.

11. Verfahren nach einem der vorhergehenden Ansprüche, bei dem die teilnehmerspezifischen Profile durch unterschiedliche Prioritäten bezeichnet werden.

12. Verfahren nach einem der vorhergehenden Ansprüche, bei dem die teilnehmerspezifischen Profile durch unterschiedliche zulässige Verzögerungszeiten bezeichnet werden.

13. Verfahren nach einem der vorhergehenden Ansprüche, bei dem die teilnehmerspezifischen Profile durch unterschiedliche geforderte Datenraten der Paketdatenübertragung bezeichnet werden.

14. Basisstationssystem (BSS) für eine Paketdatenübertragung von und/oder zu Mobilstationen (MS) in einem Zeitmultiplex-Mobilfunksystem,
mit einer Steuereinrichtung (SE) zum Steuern einer Funkschnittstelle zwischen Basisstationssystem (BSS) und Mobilstation (MS), wobei diese derart ausgebildet ist, dass
- ein Paketdatenkanal (GPRS-K) durch zumindest einen Zeitschlitz (ts, T, A) pro Zeitmultiplex-Rahmen (R) gebildet wird und mehrere Zeitmultiplex-Rahmen (R) einen Makrorahmen bilden,
- die Paketdatenübertragung mehrerer Mobilstationen (MS) über den gemeinsamen Paketdatenkanal (GPRS-K) erfolgt, und
- im Paketdatenkanal (GPRS-K) in zyklischen Abständen zumindest ein Zeitschlitz (PPCH) zum Rufen von Mobilstationen (MS) vorgesehen ist,
und die Steuereinrichtung (SE) ferner derart ausgebildet ist, dass sie zum Rufen der Mobilstationen (MS) eine Zuteilung von Mobilstationen (MS) zu Zeitschlitzen (PPCH) zum Rufen anhand von teilnehmerspezifischen Profilen vornimmt, wobei die Anzahl der zugeteilten Zeitschlitze (PPCH) innerhalb des Makrorahmen für die Mobilstationen (MS) individuell eingestellt werden kann.

## Claims

1. Method for paging mobile stations (MS) for the transmission of packet data in a time division multiplex mobile radio system, in which
- a packet data channel (GPRS-K) is formed by at least one time slot (ts, T, A) per time division multiplex frame (R) and a number of time division multiplex frames (R) form a macroframe,
- the packet data of a number of mobile stations (MS) is transmitted via the common packet data channel (GPRS-K),
- in the packet data channel (GPRS-K), at cyclical intervals, there is at least one time slot (PPCH) for paging mobile stations (MS),
in which the mobile stations (MS) are assigned to time slots (PPCH) for paging on the basis of user-specific profiles, whereby the number of assigned time slots (PPCH) within the macroframe can be set individually for the mobile stations (MS).

2. Method according to claim 1, in which
a number of groups for paging mobile stations (MS) are formed.

3. Method according to claim 1 or 2, in which
one mobile station (MS) is assigned to a number of groups at the same time.

4. Method according to one of the claims 2 or 3, in which
the affiliation with the groups is signalled from a base station (BS) to the mobile stations (MS).

5. Method according to one of the preceding claims, in which a mobile station (MS) signals to a base station (BS) the change in its user-specific profile, whereupon the assignment of the time slots (PPCH) for paging is changed for this mobile station (MS).

6. Method according to one of the preceding claims, in which additional time slots (TCH) for the transmission of payload data are used as time slots (PPCH) for paging.

7. Method according to claim 6, in which short identifications (id) transmitted for the transmission of payload data show, in the time slots (TCH), the availability of paging mobile stations (MS).

8. Method according to one of the preceding claims, in which a mobile station (MS) can be switched in an energy saving mode between the time slots (PPCH) assigned to it for paging.

9. Method according to one of the preceding claims, in which the user-specific profiles are identified by the different quality-of-service classes (QoS).

10. Method according to one of the preceding claims, in which the user-specific profiles are identified by the different services used by the mobile station (MS).

11. Method according to one of the preceding claims, in which the user-specific profiles are identified by the different priorities.

12. Method according to one of the preceding claims, in which the user-specific profiles are identified by the different permissible delay times.

13. Method according to one of the preceding claims, in which the user-specific profiles are identified by the different requested data rates of the packet data transmission.

14. Base station system (BSS) for the transmission of packet data from and/or to mobile stations (MS) in a time division multiplex mobile radio system,
with a control unit (SE) for controlling a radio interface between a base station system (BSS) and a mobile station (MS), in which case the latter is embodied in such a way that
- a packet data channel (GPRS-K) is formed by at least one time slot (ts, T, A) per time division multiplex frame (R) and a number of time division multiplex frames (R) form a macroframe,
- the packet data of a number of mobile stations (MS) is transmitted via the common packet data channel (GPRS-K), and
- in the packet data channel (GPRS-K), at cyclical intervals, there is at least one time slot (PPCH) for paging mobile stations (MS),
and the control unit (SE) is also embodied in such a way that for paging the mobile stations (MS) it assigns the mobile stations (MS) to time slots (PPCH) for paging on the basis of user-specific profiles, whereby the number of assigned time slots (PPCH) within the macroframe can be set individually for the mobile stations (MS).

## Revendications

1. Procédé pour appeler des stations mobiles (MS) pour une transmission de données en paquets dans un système de téléphonie mobile à multiplexage dans le temps,
- un canal de données en paquets (GPRS-K) étant formé au moyen d'au moins un créneau temporel (ts, T, A) par trame à multiplexage dans le temps (R) et plusieurs trames à multiplexage dans le temps (R) formant une macrotrame,
- la transmission de données en paquets de plusieurs stations mobiles (MS) étant réalisée par l'intermédiaire du canal commun de données en paquets (GPRS-K),
- au moins un créneau temporel (PPCH) pour appeler des stations mobiles (MS) étant prévu dans le canal de données en paquets (GPRS-K) à intervalles cycliques,
dans lequel une affectation de stations mobiles (MS) à des créneaux temporels (PPCH) destinés à appeler est réalisée à l'aide de profils spécifiques à l'abonné, le nombre des créneaux temporels affectés (PPCH) dans la macrotrame pouvant être réglé individuellement pour les stations mobiles (MS).

2. Procédé selon la revendication 1, dans lequel
plusieurs groupes sont formés pour appeler des stations mobiles (MS).

3. Procédé selon la revendication 1 ou 2, dans lequel
une station mobile (MS) est affectée simultanément à plusieurs groupes.

4. Procédé selon l'une quelconque des revendications 2 ou 3, dans lequel
l'appartenance aux groupes d'une station de base (BS) est signalée aux stations mobiles (MS).

5. Procédé selon l'une quelconque des revendications précédentes, dans lequel
une station mobile (MS) d'une station de base (BS) signale la modification de son profil spécifique à l'abonné, sur quoi, pour cette station mobile (MS), une affectation modifiée des créneaux temporels (PPCH) destinés à appeler est réalisée.

6. Procédé selon l'une quelconque des revendications précédentes, dans lequel des créneaux temporels supplémentaires (TCH) sont exploités comme créneaux temporels (PPCH) destinés à appeler pour la transmission de données utiles.

7. Procédé selon la revendication 6, dans lequel des identifications abrégées (id), transmises dans les créneaux temporels (TCH) pour la transmission des données utiles, indiquent la présence d'appels pour les stations mobiles (MS).

8. Procédé selon l'une quelconque des revendications précédentes, dans lequel
une station mobile (MS) est connectée dans un mode d'énergie entre les créneaux temporels (PPCH) destinés à appeler qui lui sont affectés.

9. Procédé selon l'une quelconque des revendications précédentes, dans lequel
les profils spécifiques à l'abonné sont désignés au moyen de différentes classes de qualité de service (QoS).

10. Procédé selon l'une quelconque des revendications précédentes, dans lequel
les profils spécifiques à l'abonné sont désignés au moyen de différents services utilisés par la station mobile (MS).

11. Procédé selon l'une quelconque des revendications précédentes, dans lequel
les profils spécifiques à l'abonné sont désignés au moyen de différentes priorités.

12. Procédé selon l'une quelconque des revendications précédentes, dans lequel
les profils spécifiques à l'abonné sont désignés au moyen de différents temps de retard admissibles.

13. Procédé selon l'une quelconque des revendications précédentes, dans lequel
les profils spécifiques à l'abonné sont désignés au moyen de différents débits de données demandés de la transmission de données en paquets.

14. Système de station de base (BSS) pour une transmission de données en paquets en provenance et/ou vers des stations mobiles (MS) dans un système de téléphonie mobile à multiplexage dans le temps,
comprenant un dispositif de commande (SE) pour commander une interface radio entre un système de station de base (BSS) et une station mobile (MS), celui-ci étant exécuté de telle manière
- qu'un canal de données en paquets (GPRS-K) est formé par au moins un créneau temporel (ts, T, A) par trame à multiplexage dans le temps (R) et que plusieurs trames à multiplexage dans le temps forment une macrotrame,
- que la transmission de données en paquets de plusieurs stations mobiles (MS) est réalisée par l'intermédiaire du canal commun de données en paquets (GPRS-K) et
- qu'au moins un créneau temporel (PPCH) est prévu dans le canal de données en paquets (GPRS-K) à intervalles cycliques pour appeler des stations mobiles (MS),
et le dispositif de commande (SE) étant en outre exécuté de telle manière que, pour appeler les stations mobiles, il exécute une affectation de stations mobiles (MS) à des créneaux temporels (PPCH) destinés à appeler, à l'aide de profils spécifiques à l'abonné, le nombre des créneaux temporels affectés (PPCH) pouvant être réglé individuellement dans la macrotrame pour les stations mobiles (MS).
